# EUROPEAN PATENT APPLICATION

(11) **EP 2 112 781 A1**
(43) Date of publication of application: **28.10.2009**
(21) Application number: 08007883.5
(22) Date of filing: 24.04.2008
(51) Int. Cl.: H04L 12/18, H04M 11/06

(54) **Bundling unit in a dsl network**

(71) Applicant: Koninklijke KPN N.V., 2595 AL The Hague (NL)
(72) Inventor: Casal Gomez, Alejandro Vicente, 2492 VX The Hague (NL)
(74) Representative: Wuyts, Koenraad Maria

(57) **Abstract**

The invention relates to a bundling unit (BU) for facilitating communication between a plurality of clients (CL1, CL2, CL3, CL4) and a DSLAM (10) in a DSL network to transmit at least one signal from the DSLAM (10) to at least one client (CL1, CL2, CL3, CL4) upon request. The bundling unit (BU) is arranged to communicate with the DSLAM (10) via a first set of lines (L1, L2, L3, L4) and with the clients (CL1, CL2, CL3, CL4) via a second set of lines (L1', L2', L3', L4'). The bundling unit (BU) is arranged to
a) receive a request for a signal from a client (100);
b) verify if the requested signal is already available at the bundling unit (BU) (102) and
b1) if so, forward the requested signal to the client (103), and
b2) if not, select one of the available lines (L1, L2, L3, L4) to forward the request to the DSLAM (10) (106).

## Description

### TECHNICAL FIELD

The invention relates to a bundling unit in a DSL network.

### STATE OF THE ART

Digital Subscriber Line (DSL) technology is used to create a relatively large digital bandwidth on for instance a telephone line. Many variants of DSL technology exist, such as asymmetric DSL (ADSL, VDSL, etc.) and symmetric DSL (SDSL, HDSL, etc.).

DSL traffic is managed by a so-called DSL Access Module (DSLAM), being an intermediate between a client and the network.

It is known that the available DSL bandwidth depends on the distance between the client and the central office device, such as the DSL Access Module (DSLAM). The bandwidth decreases with increasing distance.

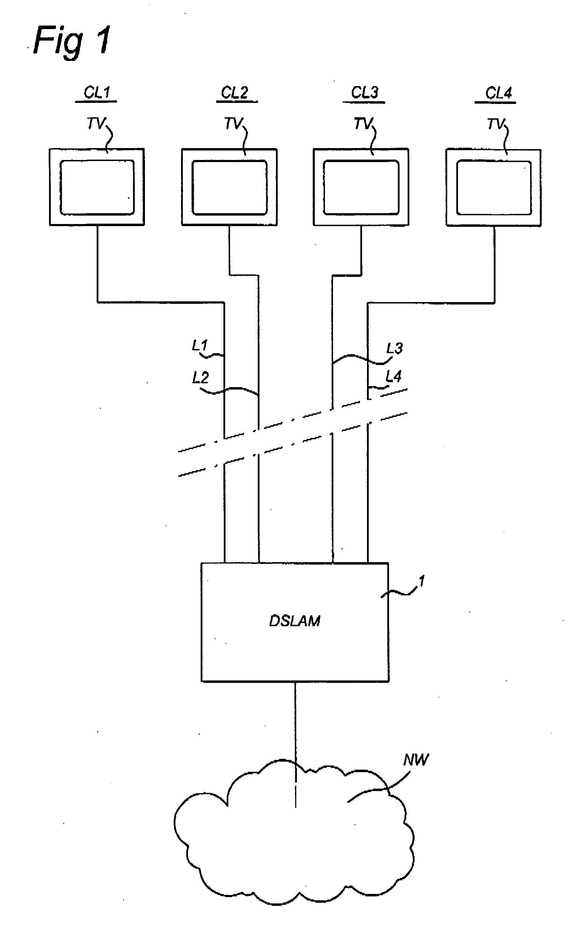

The layout of the DSL network is explained in more detail below with reference to Fig. 1.

DSL networks are nowadays used for all kinds of data transport, such as for distributing television signals to clients. This means that the transmission of TV signals does no longer require a separate coaxial TV cable network.

It is an object of the invention to increase the bandwidth available for clients in a DSL network, especially for data transport such as television signals.

### SHORT DESCRIPTION

According to an aspect there is provided a bundling unit for facilitating communication between a plurality of clients and a DSLAM in a DSL network to transmit at least one signal from the DSLAM to at least one client upon request, wherein the bundling unit is arranged to communicate with the DSLAM via a first set of lines and with the clients via a second set of lines, and the bundling unit is arranged to
a) receive a request for a signal from a client;
b) verify if the requested signal is already available at the bundling unit and
   b1) if so, forward the requested signal to the client, and
   b2) if not, select one of the available lines to forward the request to the DSLAM. As a result, the bundling unit will receive the requested signal from the DSLAM via the selected line.

According to an aspect the bundling unit is further arranged to
c) in reaction to b2) receive the requested signal from the DSLAM and forward the signal to the client.

According to an embodiment the signal is a multicast signal. The multicast signal may comprise at least one of a television signal, a radio signal, a data signal.

According to an embodiment the bundling unit is further arranged to
al) use client subscription information to verify if the client the request was received from is allowed to receive the requested television channel. This is to ensure that clients can not receive (television) signals for which they are not authorized.

According to an embodiment the bundling unit further comprises or has access to a memory comprising client subscription information. The client subscription information may comprise information to verify which television signals the client is allowed to receive or information about a fixed bandwidth assigned to a client.

According to an embodiment the bundling device further comprises a plurality of client connectors to communicate with the at least one client via the second set of lines respectively. Each client connector may be associated with a single client.

According to an embodiment the bundling device further comprises a plurality of DSLAM connectors to communicate with the DSLAM via the first set of lines respectively. Each DSLAM connector may be associated with a single line of the first set of lines.

According to an embodiment the bundling unit comprises more client connectors than DSLAM connectors. The embodiments make it possible to serve a first number of clients using a second number of DSLAM connectors, the second number being less than the first number. For instance, the number of DSLAM connectors docs not need to exceed the number of available television signals available on the DSLAM. Also, it may be anticipated that not all clients request bandwidth at the same time.

According to an embodiment the bundling unit comprises less client connectors than DSLAM connectors. This allows providing a relatively high bandwidth to a number of available clients.

According to an embodiment action b2 may further comprise
b2-1) verify if bandwidth is available on one of the lines comprised by the first set of lines to meet the request, and if not
b2-2) re-distribute signals already received via the first set of lines over the first set of lines to create bandwidth for the requested signal, if possible.

According to an embodiment the bundling unit BU is further arranged to
- generate an information message comprising a list of television signals that are being transmitted by the bundling unit BU to the clients CL1, CL2, CL3, CL4,
- transmit the information message to at least one client CL1. CL2, CL3, CL4 to be displayed on a television set TV of the at least one client CL1, CL2, CL3, CL4.

According to an embodiment the bundling unit BU is further be arranged to
1) receive at least one list of program files from providing clients CL1, CL2, CL3, CL4 comprising information about program files stored in association with certain providing clients,
II) generate a combined list of program files based on the at least one received list of program files,
III) transmit the combined list to at least one requesting client CL2,
IV) receive a selection of a program file comprised in the combined list from a requesting client CL2,
V) forward the selection to a providing client CL1, and
VI) facilitate transmittal of the selected program from the providing client CL1 to the requesting client CL2.

According to an aspect there is provided a method for operating a bundling unit for facilitating communication between a plurality of clients and a DSLAM in a DSL network to transmit at least one signal from the DSLAM to at least one client upon request, wherein the bundling unit is arranged to
a) receive a request for a signal from a client;
b) verify if the requested signal is already available at the bundling unit and
   b1) if so, forward the requested signal to the client, and
   b2) if not, select one of the available lines to forward the request to the DSLAM.

According to an embodiment the method further comprises
c) in reaction to b2) receive the requested signal from the DSLAM and forward the signal to the client.

According to an aspect there is provided a computer program product comprising data and instructions that can be loaded by a computer arrangement, allowing said computer arrangement to perform the methods according to the above.

According to an aspect there is provided a data carrier provided with such a computer program product.

### SHORT DESCRIPTION OF THE DRAWINGS

Embodiments will now be described, by way of example only, with reference to the accompanying schematic drawings in which corresponding reference symbols indicate corresponding parts, and in which:
- Figure 1 schematically depicts a DSL network according to the prior art,
- Figure 2 schematically depicts a DSL network according to an embodiment,
- Figure 3 schematically depicts a computer arrangement,
- Figure 4 schematically depicts a bundling unit according to an embodiment,
- Figure 5 schematically depicts a flow diagram according to an embodiment, and
- Figure 6 schematically depicts a flow diagram according to a further embodiment.

### DETAILED DESCRIPTION

Fig. 1 schematically depicts a DSLAM 1 according to the prior art, which is on one side connected to a number of clients CL1, CL2, CL3, CL4, and on the other hand is connected to a further network NW, such as the PSTN-network, the Internet and the like. Each client CL1, CL2, CL3, CL4 may comprise a television set TV, personal computer or the like to process the received television signals and display the television signals.

As can be seen, each client has its own line L1, L2, L3, L4 connecting the client CL1, CL2, CL3, CL4 to the DSLAM. This means that each client CL1, CL2, CL3, CL4 can only use the bandwidth provided by its associated line.

When setting up or disconnecting a connection between a client and the DSLAM 1 protocols are used that arc known by the skilled person. In general, the client sends IGMP messages, such as a join message, leave message, to the DSLAM 1 in order to request or abandon multicast (television) channels.

The invention is based on the insight that this network architecture does not allow an efficient use of the total available bandwidth provided by lines L1, L2, L3, L4 for a few reasons.

Firstly, the lines L1, L2, L3, L4 are not used all of the time. So, the first client C1 using first line L1, can not use the bandwidth of line L2 associated with the second client C2 when client CL2 is not using the second line L2.

Secondly, when the first and second clients CL1, CL2 watch the same television channel, the same television signal is fed through both lines L1, L2.

Therefore, embodiments are provided in which the respective lines L1, L2, L3, L4 are no longer directly associated with one particular client CL1, CL2, CL3, CL4. A bundling unit BU is provided to manage the DSL traffic and make sure that the available capacity of lines L1, L2, L3, L4 is used in a more efficient way.

The bundling unit BU may be located in the vicinity of the clients CL1, CL2, CL3, CL4 so that lines L1, L2, L3, L4 that are now used in a more efficient way cover most of the distance between the clients CL1, CL2, CL3, CL4 and the DSLAM 1.

The clients CL1, CL2, CL3, CL4 may for instance be located in a hotel, a hospital, a block of flats, etc. The bundling unit BU may be located in or near the hotel, hospital, block of flats etc.

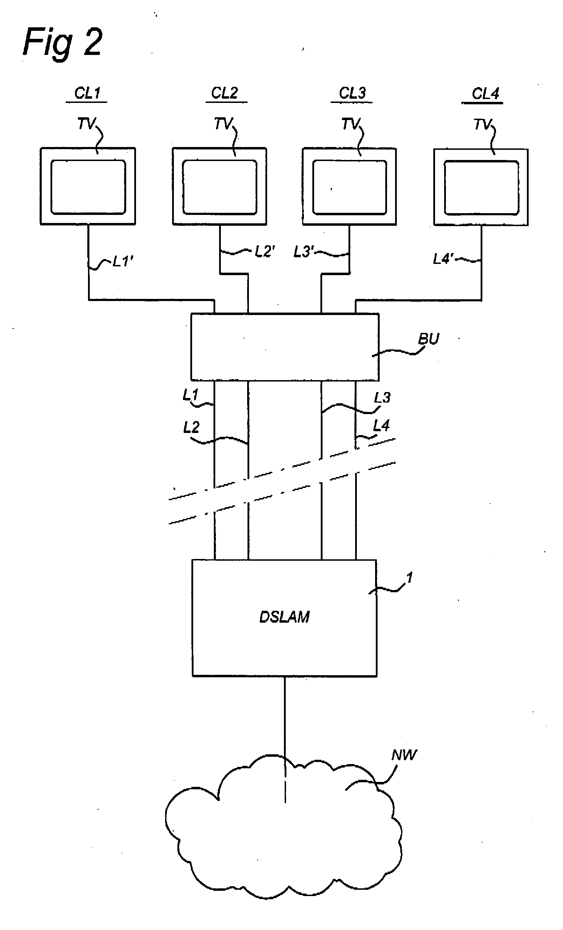

Fig. 2 schematically depicts an embodiment comprising the bundling unit BU. Corresponding reference symbols indicate corresponding parts as in Fig. 1. Fig. 2 further comprises a bundling unit BU which is connected to each client CL1, CL2, CL3, CL4 via separate lines L1', L2', L3', L4'. The bundling unit BU is connected with the DSLAM via lines L1, L2, L3, L4.

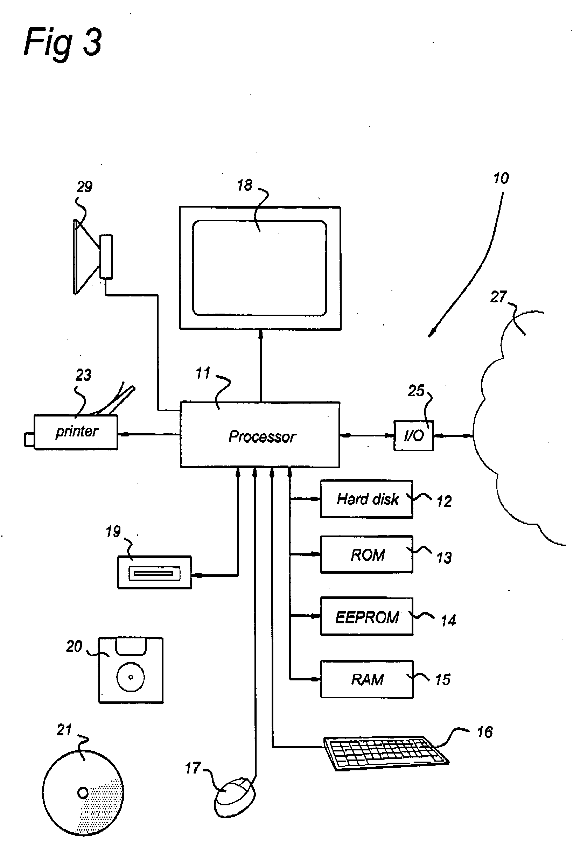

The bundling unit BU may be formed as a computer, such as explained below with reference to Fig. 3.

### Computer arrangement

In Figure 3, an overview is given of a computer arrangement 10 that may function as bundling unit BU according to the embodiments. The computer arrangement 10 comprises a processor 11 for carrying out arithmetic operations.

The processor 11 is connected to a plurality of memory components, including a hard disk 12, Read Only Memory (ROM) 13, Electrically Erasable Programmable Read Only Memory (EEPROM) 14, and Random Access Memory (RAM) 15. Not all of these memory types need necessarily be provided. Moreover, these memory components need not be located physically close to the processor 11 but may be located remote from the processor 11.

The processor 11 may also be connected to devices for inputting instructions, data etc. by a user, like a keyboard 16, and a mouse 17. Other input devices, such as a touch screen, a track ball and/or a voice converter, known to persons skilled in the art may be provided too.

A reading unit 19 connected to the processor 11. may be provided. The reading unit 19 is arranged to read data from and possibly write data on a data carrier like a floppy disk 20 or a CDROM 21. Other data carriers may be tapes, DVD, CD-, DVD-R, memory sticks etc. as is known to persons skilled in the art.

The processor 11 may also be connected to a printer 23 for printing output data on paper, as well as to a display 18, for instance, a monitor or LCD (Liquid Crystal Display) screen, or any other type of display known to persons skilled in the art.

The processor 11 may be connected to a loudspeaker 29.

The processor 11 may be arranged to communicate with remote computer arrangements 10, for instance via network 27, such as the Public Switched Telephone Network (PSTN), a Local Area Network (LAN), a Wide Area Network (WAN), an IP network etc. by means of I/O device 25.

The data carrier 20, 21 may comprise a computer program product in the form of data and instructions arranged to provide the processor with the capacity to perform a method in accordance with the embodiments. However, such a computer program product may, alternatively, be downloaded via network 27.

The processor 11 may be implemented as stand alone system, or as a plurality of parallel operating processors each arranged to carry out subtasks of a larger computer program, or as one or more main processors with several sub-processors. Parts of the functionality of the invention may even be carried out by remote processors communicating with processor 11 through the network 27.

The memory components may comprise programming lines and instructions readable and executable by the processor 11, to provide the processor with functionality according to the embodiments.

It will be understood that also other network points as schematically depicted in Fig. 2, such as the client CL1, CL2, CL3, CL4 and the DSLAM 1 may be formed as computer arrangements, similar to Fig. 3.

According to an embodiment, the bundling unit BU may be arranged to function as one or more DSL modems and a router to which all clients CL1, CL2, CL3, CL4 are connected and one or more DSL modems to which the DSLAM is connected via lines L1, L2, L3, L4. However, these DSL modems facing the clients CL1, CL2, CL3, CL4 are not always necessary. For instance, in case the wiring in an apartment building, hospital, etc is e.g. CAT5 no modulation is needed towards the clients, so no DSL modems are needed. The modems may be used to talk to modems in the DSLAM 1.

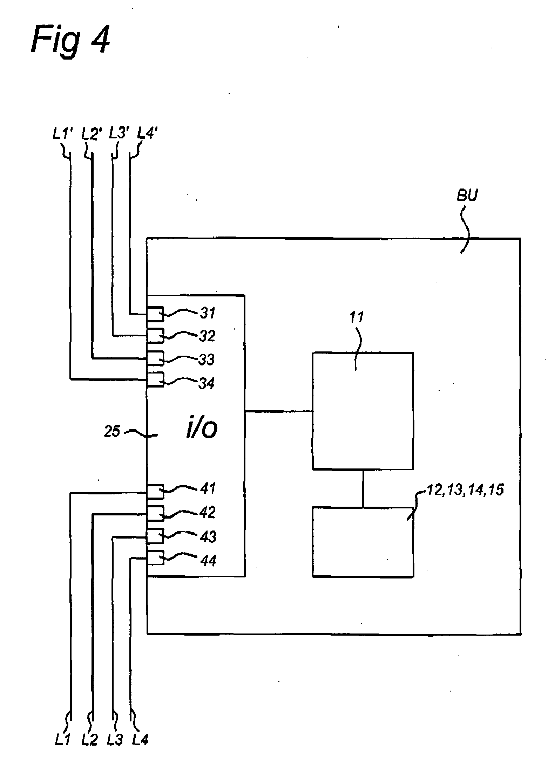

Fig. 4 provides a more schematic view than Fig. 3 of an embodiment of the bundling unit BU, showing processor 11, being connected to memory components 12, 13, 14, 15 and I/O device 25.

The I/O device 25 facilitates communication with the DSLAM 10 (not shown) via lines L1, L2, L3, L4 and facilitates communication with the clients CL1, CL2, CL3, CL4 via lines L1', L2', L3', L4'.

Fig. 4 clearly shows that the bundling unit BU may comprise a plurality, such as a first, second, third and fourth client connector 31, 32, 33, 34 to communicate with the clients CL1, CL2, CL3, CL4 via lines L1', L2', L3', L4' respectively. Bundling unit BU further comprises a plurality, such as a first, second, third, fourth DSLAM connector 41, 42,43,44 to communicate with the DSLAM 10 via lines L1, L2, L3, L4 respectively.

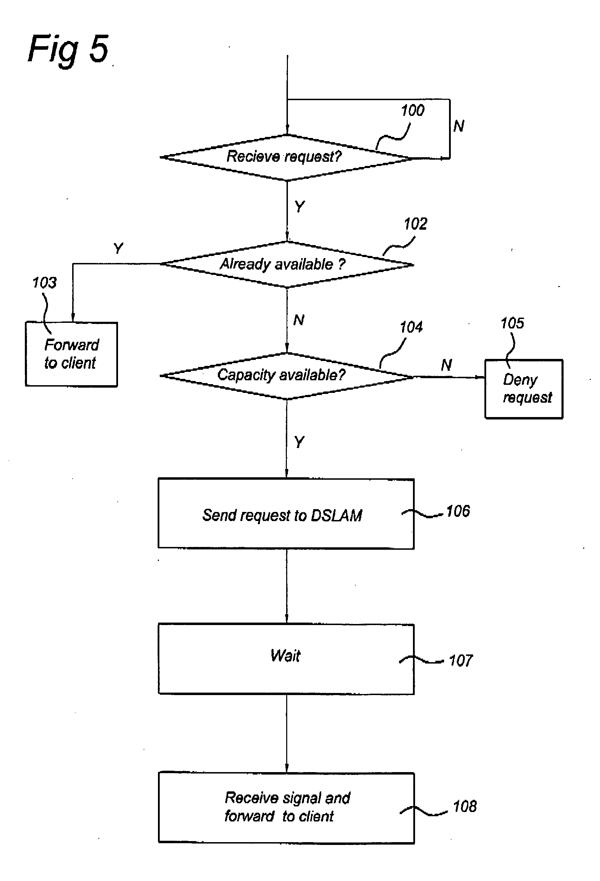

The processor 11 may be arranged to provide the bundling unit BU with the functionality according to a method as described below with reference to Fig. 5.

In a first action 100 the bundling unit BU waits to receive a request from one of the clients CL1, CL2, CL3, CL4 via the respective client connector 31, 32, 33, 34. The request may be a request to receive a certain television signal (a particular channel).

If no request is received, the bundling unit BU remains waiting according to action 100. Once a request is received from for instance the first client CL1 via the first client connector 31, the bundling unit BU checks in action 102 if the requested television signal is already available on one of the lines L1, L2, L3, L4 at the bundling unit BU.

If the requested television signal is already available, for instance because the bundling unit BU was already receiving that particular television signal on behalf of another client, for instance the second client CL2, the bundling unit BU proceeds to action 103, in which the already available television signal is forwarded to the first client CL1 via first client connector 31. This way, no additional bandwidth is required on lines L1, L2, L3, L4.

If the requested television signal is not already available, the bundling unit BU proceeds to action 104, in which the bundling unit BU verifies if enough bandwidth or capacity is available on the lines L1, L2, L3, L4 connecting the bundling unit BU to the DSLAM 10. This action may be performed by evaluating for each line how much of the total bandwidth is already in use and compare the remaining bandwidth of each line with the bandwidth that is required for fulfilling the request.

According to an embodiment, action 104 may further comprise redistributing signals already received via the first set of lines L1, L2, L3, L4 over the first set of lines L1, L2, L3, L4 to create bandwidth on one line for the requested signal, if possible.

For instance, in case all available lines of the first set of lines L1, L2, L3, L4 are in use using approximately 40% of the bandwidth of each line and the request requires 75% of the bandwidth of a single line (e.g. HDTV). According to this situation none of the lines is able to provide the bandwidth for the request.

Therefore, in action 104 the bundling unit BU may re-distribute the signals already received via the first set of lines L1, L2, L3, L4 over the first set of lines L1, L2, L3, L4 to create bandwidth to meet the request. For instance, the bundling unit BU may decide to move the signal received via the first line L1 to the second line L2. The second line L2 will be able to transmit two signals as the combined bandwidth docs not exceed the available bandwidth on the second line L2 (40% + 40% = 80%). The first line L1 is now able to meet the request and can be used for the transmission of for instance the HDTV signal. This embodiment enables a more efficient use of the first set of lines L1,L2,L3, L4.

Moving a signal from one line to another line may be done by sending appropriate (IGMP) messages to the DSLAM 10, such as for instance sending a leave message via the first line and a join message via the other line.

So, action 104 may comprise verifying if enough bandwidth or capacity is available and possibly creating available bandwidth or capacity by redistributing signals.

If not enough bandwidth is available on the lines L1, L2, L3, L4 (possibly also not after re-distribution), the request is denied, and a deny message is transmitted to the first client CL1 via first client connector 31 in action 105.

If however in action 104 it is determined that enough bandwidth is available, the bundling unit BU sends a request to the DSLAM 10 to request for the requested television signal via one of the available DSLAM connectors 41, 42, 43, 44. It is noted that the bundling unit BU does not necessary use the first line L1 to process a request from the first client CL1. According to the embodiments, the lines L1, L2, L3, L4 are no associated with one particular client CL1, CL2, CL3, CL4.

In action 107 the bundling unit BU waits to receive the requested television signal, and, in action 108, the bundling unit BU receives and forwards the requested television signal to the first client CL1 via one of the DSLAM 10 connectors and the client connector 31 respectively.

As an alternative, a further action 101 may be provided in between actions 100 and 102. In an action 101 (not shown in the drawings), the bundling unit BU may verify if the client CL1 the request was received from is allowed to receive the requested television channel. The bundling unit BU may comprise or have access to client subscription information, in which for each client subscription information is stored. This client subscription information can be used to verify which television signals the client is allowed to receive. If the client is not allowed to receive the requested television signal, the bundl ing unit BU may continue with action 105 in which the request is denied. If the client is allowed to receive the requested television signal, the bundling unit BU continues with action 102.

As another alternative, the client subscription information may comprise a fixed bandwidth assigned to each client in order to guarantee a minimum service for that client. Based on the assigned bandwidth, a request may be refused, if meeting the request would result in exceeding the assigned bandwidth.

The clients subscription information may be stored in memory 12, 13, 14, 15 comprised by the bundling unit BU, but may also be stored at a remote memory, for instance at the DSLAM 10, that is accessible by the bundling unit BU.

In the description the number of clients CL1, CL2, CL3, CL4 is four. However, it will be understood that this is just an example and that in fact the bundling unit BU may be used to serve any number of clients equal or exceeding two.

In the above example, the number of lines L1, L2, L3, L4 connecting the bundling unit BU to the DSLAM 10 equal the number of clients CL1, CL2, CL3, CL4. However, this is not necessarily the case. The number of clients CL1, CL2, CL3, CL4 may be higher than the number of lines L1, L2, L3, L4 connecting the bundling unit BU to the DSLAM 10, anticipating that not all clients will require bandwidth at the same time. Also, the number of lines connecting the bundling unit BU to the DSLAM 10 may be higher than the number of clients CL1, CL2, CL3, CL4, for instance in the case that not all clients CL1, CL2, CL3, CL4 are subscribed to the television service. Also, if the number of available television signals is limited, for instance 32, no more than 32 lines connecting the bundling unit BU to the DSLAM 10 are necessary for television signals, while the number of clients may exceed 32.

### Information message

According to an embodiment, the bundling unit BU is further arranged to:
- generate an information message comprising a list of television signals that are being transmitted by the bundling unit BU to the clients CL1, CL2, CL3, CL4,
- transmit the information message to at least one client CL1, CL2, CL3, CL4 to be displayed on a television set TV of thc at least one client CL1, CL2, CL3, CL4.

According to this embodiment, in use, the bundling unit BU has knowledge about which clients CL1, CL2, CL3, CL4 receive which television signals. The bundling unit BU may be arranged to send an information message to a client CL1 to be displayed on the television set TV of that client CL1 informing the client CL1 of the television signals that arc being transmitted by the bundling unit BU to the clients CL1, CL2, CL3, CL4.

The information message may comprise a list of television signals that are being transmitted by the bundling unit BU to the other clients CL2, CL3, CL4 (i.e. not comprising the recipient of the information message) or all clients CL1, CL2, CL3, CL4. The list may only comprise television signals that arc transmitted to at least a predetermined threshold number of clients. In the example according to the figures the predetermined threshold number may be two. The list may also only comprise the television signals that are transmitted most, such as a list of the three or five most watched television signals.

The information message may only be sent to clients that do not already watch the television signals comprised in the list of television signals in the information message.

The information message may inform a client CL1 of television programs that are being watched by the other clients CL2, CL3, CL4, so the client CL1 is informed of other popular programs. The effect of this may be that the informed client may change to one of the television signal comprised in the information message, thereby creating more available bandwidth on the lines L1, L2, L3, L4 between the bundling unit BU and the DSLAM 10.

The information message may be sent as part of action 104 if not enough bandwidth is available.

### Exchanging program files

The bundling unit BU may further be arranged to facilitate exchange of program files between clients CL1, CL2, CL3, CL4 connected to the same bundling unit BU. Each client CL1, CL2, CL3, CL4 may be arranged to record television signals and store them as program files on memory ME, such as memory associated with the television set TV, external memory, or memory associated with a set-top box.

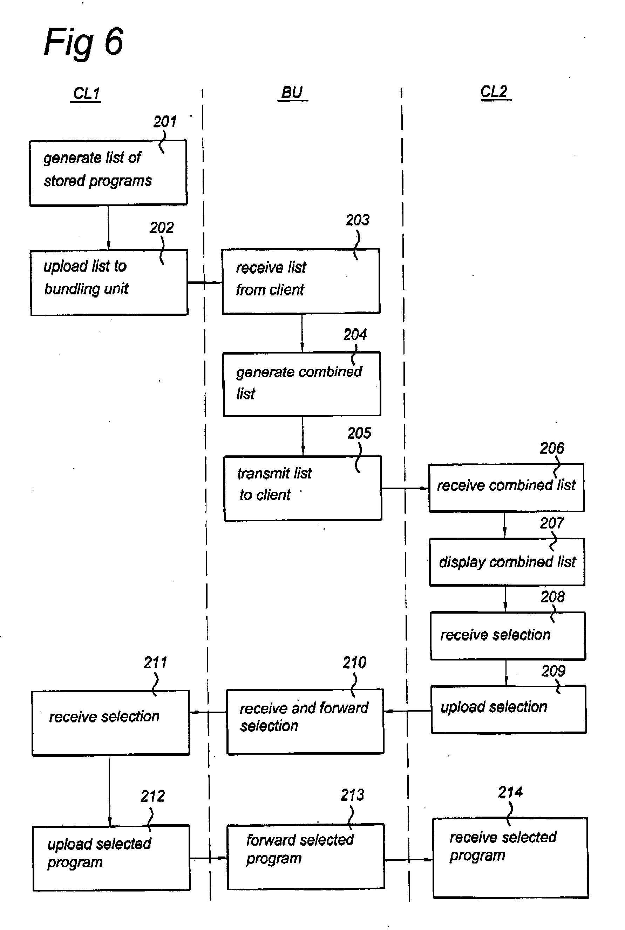

This is further explained with reference to Fig. 6, showing an exemplary flow diagram with actions as performed by a providing client CL1, a bundling unit BU and a requesting client CL2.

The providing client CL1, i.e. memory ME and/or the television set TV associated with the providing client CL1, may be arranged to generate a list of stored program files in action 201. In action 202 the providing client CL1 uploads this list to the bundling unit BU via line L1'.

The bundling unit BU is arranged to receive this list in action 203. In fact, the bundling unit BU may be arranged to receive similar lists from different providing clients CL2, CL3, CL4, although this is not shown in Fig. 6.

In action 204, the bundling unit BU generates a combined list of stored program files, being a combination of all lists received from the different providing clients in action 203. In action 205, this combined list is transmitted to at least one client, in this example client CL2, via line L2'. Of course, the bundling unit BU may also transmit the combined list to other clients.

It will be understood that actions 204 and 205 may be repeated every time a new list is received from one of the providing clients.

The combined list is received by requesting client CL2 in action 206 and subsequently displayed by the requesting client C2 in action 207. Action 207 may for instance be performed upon request of a user associated with the requesting client CL2. The requesting client CL2 may be arranged to receive a selection made by the user from the combined list displayed in action 207. The selection may for instance be received via a remote control, controlling the television set TV.

The selection is then uploaded to the bundling unit BU in action 209 via line L2'. In action 210, the bundling unit BU receives the selection and forwards the selection to the providing client, in this case providing client CL1. The appropriate providing client may be determined by the bundling unit BU by consulting stored copies of the lists received from the different providing clients in action 203.

In action 211, the providing client CL1 receives the selection and in response, uploads the selected program file to the bundling unit BU in action 212, the bundling unit BU in turn forwarding the program file to the requesting client CL2 in action 213. Finally the program file is received by the requesting client CL2 in action 214. Action 214 may further comprise displaying the received program file and/or storing the received program file on memory associated with the requesting client C L2.

Depending on the case, the transfer of the program file may be a streaming feed allowing immediate displaying on the receiving side (possibly using buffering techniques). In case no immediate real-time displaying is required, the transfer may use other transfer techniques and protocols.

It will be understood that a client may be both a providing client as a requesting client, i.e. a client may share certain programs with the other clients and at the same time request other programs from the other clients.

Furthermore, exchanging program files may be provided with security measures as passwords and the like to make sure that users can decide which program files may be shared by other clients (by assigning a password known to (some) other clients or not assigning a password at all) and which program files may not be shared (by assigning a secret password).

So, according to this embodiment there is provided a bundling unit BU for facilitating communication between a plurality of clients CL1, CL2, CL3, CL4, wherein the bundling unit BU is arranged to communicate with the clients CL1, CL2, CL3, CL4 via a set of lines L1', L2', L3', L4', and the bundling unit (BU) is arranged to
I) receive at least one list of program files from providing clients CL1, CL2, CL3, CL4 comprising information about program files stored in association with certain providing clients,
II) generate a combined list of program files based on the at least one received list of program files,
III) transmit the combined list to at least one requesting client CL2,
IV) receive a selection of a program file comprised in the combined list from a requesting client CL2,
V) forward the selection to a providing client CL1, and
VI) facilitate transmittal of the selected program from the providing client CL1 to the requesting client CL2. When used like this, the bundling unit BU may also be referred to as an exchange unit.

This embodiment may be combined with other embodiments provided above. Thus, the bundling unit BU may be arranged for facilitating communication between a plurality of clients CL1, CL2, CL3, CL4 and a DSLAM 10 in a DSL network to transmit at least one signal from the DSLAM 10 to at least one client CL1, CL2, CL3, CL4 upon request, wherein the bundling unit BU is arranged to communicate with the DSLAM 10 via a first set of lines L1, L2, L3, L4 and with the clients CL1, CL2, CL3, CL4 via a second set of lines L1', L2', L3', L4', and the bundling unit BU is arranged to a) receive a request for a signal from a client (100);
b) verify if the requested signal is already available at the bundling unit (BU) (102) and
   b1) if so, forward the requested signal to the client (103), and
   b2) if not, select one of the available lines (L1, L2, L3, L4) to forward the request to the DSLAM (10) (106).

### Further remarks

The above embodiments have several advantages, some of which are already mentioned above.

In case two or more clients watch the same television channel (multicast channel), the associated television signal only needs to be transmitted once by the DSLAM 10 to the bundling unit BU. This reduces the amount of bandwidth used on lines L1, L2, L3, L4. So, the bundling unit BU is used to bundle different channels to avoid unnecessary multicast messages being transmitted by the DSLAM 10.

Also, if a single clients wants to receive two television signals at the same time (e.g. watching two different television channels on two different television sets), the two television signals are not necessarily transmitted via a single line, i.e. the line associated with the client. The bundling unit BU is now capable of using two lines for handling the request for two television signals, if a second line is available.

As a consequence, a client that is situated relatively far away from the DSLAM 10 can now be offered more television channels. So, the embodiments at least partially compensate the disadvantage of reduced bandwidth experienced by a client being relatively far away from the DSLAM 10.

The distance to the DSLAM 1 is reduced, as the relevant distance is now the longest distance of
A) the distance between a client and the bundling unit BU or
B) the distance between the bundling unit BU and the DSLAM 1.

So, it is no longer the total distance between the client and the DSLAM 10 that is relevant. In most cases the relevant distance is the distance between the bundling unit BU and the DSLAM 1, as this is usually the longest, though this will be still be shorter than distance A or B. So, a higher throughput can be achieved over a line L1, L2 L3, L4, such as a twisted pair cable.

Furthermore, the embodiments can be integrated in existing infrastructure, such as existing ADSL2+ infrastructure, without requiring serious modifications in the architecture. Migration to newer technologies can be postponed due to the provided higher (experienced) bandwidth.

The descriptions above arc intended to be illustrative, not limiting. Thus, it will be apparent to one skilled in the art that modifications may be made to the invention as described without departing from the scope of the claims set out below.

## Claims

1. Bundling unit (BU) for facilitating communication between a plurality of clients (CL1, CL2, CL3, CL4) and a DSLAM (10) in a DSL network to transmit at least one signal from the DSLAM (10) to at least one client (CL1, CL2, CL3, CL4) upon request, wherein the bundling unit (BU) is arranged to communicate with the DSLAM (10) via a first set of lines (L1, L2, L3, L4) and with the clients (CL1, CL2, CL3, CL4) via a second set of lines (L1', L2', L3', L4'), and the bundling unit (BU) is arranged to
a) receive a request for a signal from a client (100);
b) verify if the requested signal is already available at the bundling unit (BU) (102) and
b1) if so, forward the requested signal to the client (103), and
b2) if not, select one of the available lines (L1, L2, L3, L4) to forward the request to the DSLAM (10) (106).

2. Bundling unit (BU) according to claim 1, wherein the bundling unit (BU) is further arranged to
c) in reaction to b2) receive the requested signal from the DSLAM (10) and forward the signal to the client (108).

3. Bundling unit (BU) according to claim 1, wherein the signal is a multicast signal.

4. Bundling unit (BU) according to any one of the preceding claims, wherein the bundling unit (BU) is further arranged to
a1) use client subscription information to verify if the client the request was received from is allowed to receive the requested television channel.

5. Bundling device (BU) according to claim 4, further comprising or having access to a memory (12, 13, 14, 15) comprising client subscription information.

6. Bundling unit (BU) according to any one of the preceding claims, wherein the bundling device (BU) further comprises a plurality of client connectors (31, 32, 33, 34) to communicate with the at least one client (CL1, CL2, CL3, CL4) via the second set of lines (L1', L2', L3', L4') respectively.

7. Bundling unit (BU) according to any one of the preceding claims, wherein the bundling device (BU) further comprises a plurality of DSLAM connectors (41, 42, 43, 44) to communicate with the DSLAM (10) via the first set of lines (L1, L2, L3, L4) respectively.

8. Bundling unit (BU) according to claims 6 and 7, comprising more client connectors (31, 32, 33, 34) than DSLAM connectors (41, 42, 43, 44).

9. Bundling unit (BU) according to claims 6 and 7, comprising less client connectors (31, 32, 33, 34) than DSLAM connectors (41, 42, 43, 44).

10. Bundling unit (BU) according to any one of the preceding claims, wherein action b2 further comprises
b2-1) verify if bandwidth is available on one of the lines comprised by the first set of lines (L1, L2, L3, L4) to meet the request (104), and if not
b2-2) re-distribute signals already received via the first set of lines (L1, L2, L3, L4) over the first set of lines (L1, L2, L3, L4) to create bandwidth for the requested signal, if possible.

11. Bundling unit (BU) according to any one of the preceding claims, wherein the bundling unit (BU) is further be arranged to
- generate an information message comprising a list of television signals that are being transmitted by the bundling unit (BU) to the clients (CL1, CL2, CL3, CL4),
- transmit the information message to at least one client (CL1, CL2, CL3, CL4) to be displayed on a television set (TV) of the at least one client (CL1, CL2, CL3, CL4).

12. Bundling unit (BU) according to any one of the preceding claims, wherein the bundling unit (BU) is further be arranged to
I) receive at least one list of program files from providing clients (CL1, CL2, CL3, CL4) comprising information about program files stored in association with certain providing clients,
II) generate a combined list of program files based on the at least one received list of program files,
III) transmit the combined list to at least one requesting client (CL2),
IV) receive a selection of a program file comprised in the combined list from a requesting client (CL2),
V) forward the selection to a providing client (CL1), and
VI) facilitate transmittal of the selected program from the providing client (CL1) to the requesting client (CL2).

13. Method for operating a bundling unit (BU) for facilitating communication between a plurality of clients (CL1, CL2, CL3, CL4) and a DSLAM (10) in a DSL network to transmit at least one signal from the DSLAM (10) to at least one client (CL1, CL2, CL3, CL4) upon request, wherein the method comprises
a) receiving a request for a signal from a client (100);
b) verifying if the requested signal is already available at the bundling unit (BU) (102) and
b1) if so, forward the requested signal to the client (103), and
b2) if not, select one of the available lines (L1, L2, L3, L4) to forward the request to the DSLAM (10) (106).

14. Method according to claim 13, further comprising
c) in reaction to b2) receiving the requested signal from the DSLAM (10) and forward the signal to the client (108).

15. Method according to any one of the claims 13 - 14, , wherein action b2 further comprises
b2-1) verifying if bandwidth is available on one of the lines comprised by the first set of lines (L1, L2, L3, L4) to meet the request (104), and if not
b2-2) re-distributing signals already received via the first set of lines (L1, L2, L3, L4) over the first set of lines (L1, L2, L3, L4) to create bandwidth for the requested signal, if possible.

16. Method according to any one of the claims 13 - 15, wherein the method further comprises
- generating an information message comprising a list of television signals that are being transmitted by the bundling unit (BU) to the clients (CL1, CL2, CL3, CL4),
- transmit the information message to at least one client (CL1, CL2, CL3, CL4) to be displayed on a television set (TV) of the at least one client (CL1, CL2, CL3, CL4).

17. Method according to any one of the claims 13 - 16, wherein the method further comprises
1) receiving at least one list of program files from providing clients (CL1, CL2, CL3, CL4) comprising information about program files stored in association with certain providing clients,
11) generating a combined list of program files based on the at least one received list of program files,
III) transmitting the combined list to at least one requesting client (CL2),
IV) receiving a selection of a program file comprised in the combined list from a requesting client (CL2),
V) forwarding the selection to a providing client (CL21), and
VI) facilitating transmittal of the selected program from the providing client (CL1) to the requesting client (CL2).

18. Computer program product comprising data and instructions that can be loaded by a computer arrangement, allowing said computer arrangement to perform the methods according to any one of the claims 13 - 17.

19. Data carrier provided with a computer program product as claimed in claim 18.
